# FASCICULE DE BREVET EUROPEEN

(11) **EP 3 519 143 B1**
(45) Date de publication et mention de la délivrance du brevet: **26.07.2023**
(21) Numéro de dépôt: 17777909.7
(22) Date de dépôt: 03.10.2017
(51) Int. Cl.: B25J 11/00, B25J 15/00

(54) **INSTALLATION COMPORTANT UN BRAS ARTICULÉ ET UNE MACHINE D'USINAGE, ET PROCÉDÉ D'USINAGE CORRESPONDANT**
ANLAGE MIT EINEM GELENKARM UND EINER BEARBEITUNGSMASCHINE UND ENTSPRECHENDES BEARBEITUNGSVERFAHREN
INSTALLATION COMPRISING AN ARTICULATED ARM AND A MACHINING APPARATUS AND CORRESPONDING MACHINING METHOD

(30) Priorité: 03.10.2016 FR 1659519
(43) Date de publication de la demande: 07.08.2019
(73) Titulaire: Fives Machining, 46400 Saint-Laurent-les-Tours (FR)
(72) Inventeur: SOULIE, Pascal, 12700 Capdenac-Gare (FR); LUNGU, Sinziana, 12700 Capdenac-Gare (FR); CUMINAL, Philippe, 12700 Capdenac-Gare (FR); SARTORI, Jean-François, 12700 Capdenac-Gare (FR); NICAISE, Jean-Pierre, 12700 Capdenac-Gare (FR)
(74) Mandataire: Novagraaf Group
(86) Numéro de dépôt international: PCT/EP2017/075066
(87) Numéro de publication internationale: WO 2018/065408

(56) Documents cités:
- WO-A1-2004/028755
- ES-A1- 2 264 850
- JP-A- H06 336 392
- US-A1- 2012 014 759

## Description

La présente invention concerne une installation pour usiner un objet, notamment une partie d'aile d'avion, l'objet définissant une surface à usiner, par exemple le pourtour d'un trou d'homme, l'installation comportant une machine d'usinage. L'invention concerne également un procédé d'usinage correspondant.

Les ailes d'avion comportent en général des trous d'homme sur leur surface inférieure (intrados). En temps normal, ces trous d'homme sont fermés par une pièce d'obturation en continuité avec le reste de l'aile. Lorsque la pièce d'obturation est enlevée, le trou d'homme fournit un accès à l'intérieur de l'aile par exemple pour réaliser de la maintenance.

Le pourtour d'un tel trou d'homme est en général usiné alors que la partie inférieure de l'aile est déjà assemblée. Cette partie possède donc déjà une grande extension. Le trou d'homme est donc une ouverture, par exemple elliptique, sur une surface gauche de grande étendue.

Le nombre de trous d'homme à usiner est typiquement de quelques dizaines, par exemple environ trente. Le positionnement de la machine d'usinage doit dans tous les cas être précis, car l'outil d'usinage suit un parcours préprogrammé.

Chaque trou d'homme est en général d'abord réalisé à l'aide d'une machine à jet d'eau à très haute pression. Les bords du trou d'homme doivent ensuite être précisément usinés.

Pour réaliser de tels usinages, il est connu d'utiliser une machine d'usinage comportant un caisson définissant une ouverture, et un outil d'usinage monté mobile à l'intérieur du caisson.

Selon une première façon de faire, la machine d'usinage est fixe par rapport à l'atelier abritant l'installation d'usinage et l'aile est déplacée jusqu'à ce que le trou d'homme à usiner soit en vis-à-vis de l'ouverture. L'aile est alors immobilisée par des moyens adéquats et l'usinage est réalisé en déplaçant l'outil d'usinage par rapport au caisson. Toutefois, le placement de l'aile est complexe et l'aile doit être déplacée plusieurs fois de façon à traiter tous les trous d'homme.

Selon une deuxième façon de faire, la machine d'usinage est fixée sur un châssis solidaire de l'objet à usiner. Ceci impose de déplacer la machine d'usinage de façon à usiner chaque trou d'homme.

Le document WO 2004/028755 montre une installation pour usiner un objet, notamment une aile d'avion, comprenant une machine portée par un bras articulé, un système d'attache constitué de ventouses, un support monté mobile par rapport à une armature de la machine, ainsi qu'un outil d'usinage monté sur le support.

Un but de l'invention est de fournir une installation pour usiner un objet, notamment une partie d'aile d'avion, qui soit plus rapide que les installations existantes, tout en respectant les contraintes de qualité des usinages.

A cet effet, l'invention concerne une installation selon la revendication 1.

Selon des modes particuliers de réalisation, l'installation comprend l'une ou plusieurs des caractéristiques correspondant aux revendications 2 à 6, prise(s) selon toutes les combinaisons techniquement possibles.

L'invention concerne également un procédé selon la revendication 7.

Selon des modes particuliers de réalisation, le procédé comprend l'une ou plusieurs des caractéristiques correspondant aux revendications 8 à 13, prise(s) selon toutes les combinaisons techniquement possibles.

L'invention sera mieux comprise à la lecture de la description qui va suivre, donnée uniquement à titre d'exemple et faite en se référant aux dessins annexés, sur lesquels :
- la figure 1 est une vue schématique en perspective d'une installation selon l'invention,
- la figure 2 est une vue partielle, en coupe, de la partie d'aile d'avion et de certains éléments de la machine d'usinage représentés sur la figure 1,
- la figure 3 est une vue de dessus de la machine d'usinage représentée sur la figure 1,
- la figure 4 est une vue schématique de dessous montrant les points d'appui de la machine d'usinage représentée sur les figures 1 et 3 par rapport à la surface à usiner représentée sur les figures 1 et 2, et
- la figure 5 est un diagramme illustrant une consigne de déplacement de l'outil d'usinage et une consigne de déplacement corrigée, par rapport à la forme réelle à usiner.

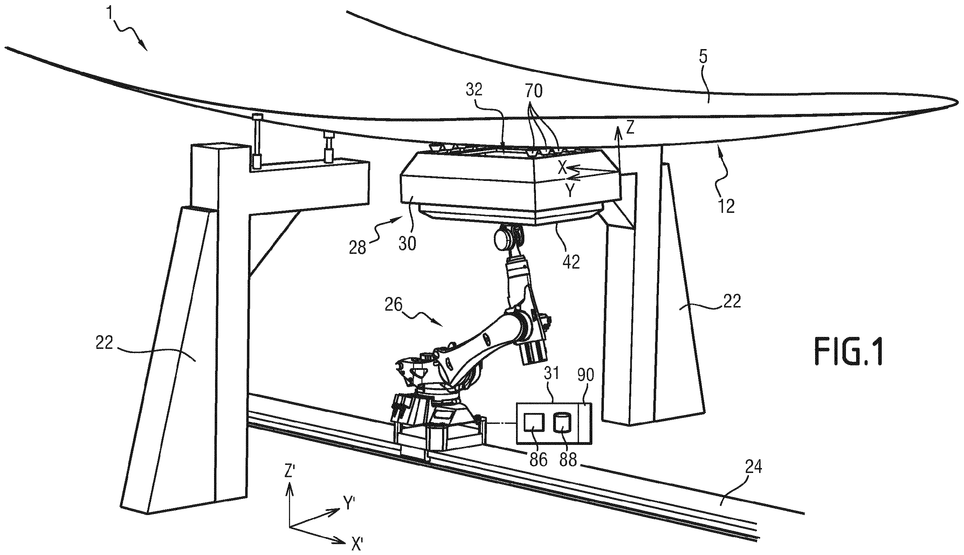

En référence à la figure 1, on décrit une installation 1 selon l'invention, adaptée pour usiner un objet 5.

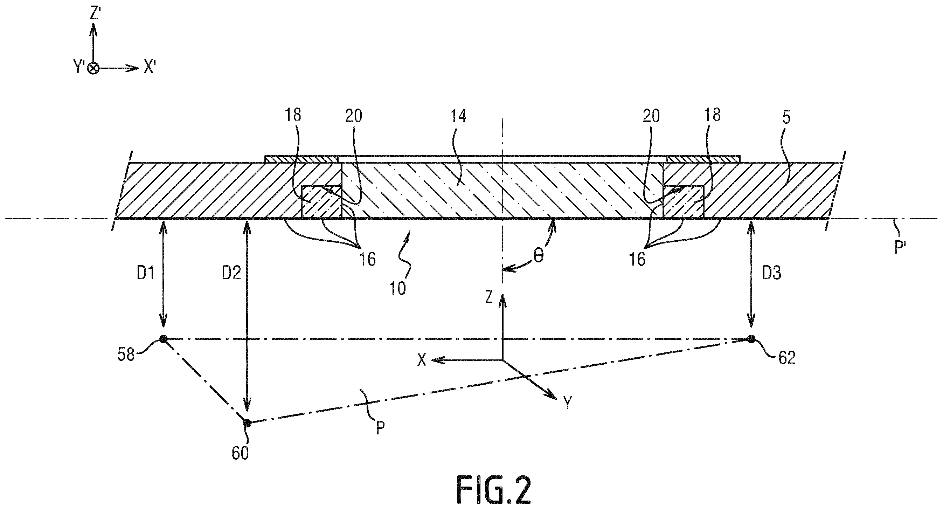

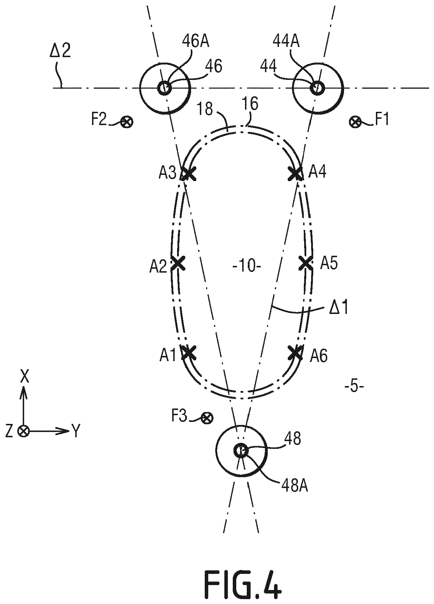

L'objet 5 est par exemple une partie d'aile d'avion en matériau composite. L'objet 5 est par exemple la partie inférieure, ou intrados, de l'aile d'avion et comporte une pluralité de trous d'homme 10 dont l'un est représenté sur la figure 2 et sur la figure 4. L'objet 5 s'étend selon une direction longitudinale X', par exemple horizontale.

On définit également une direction transversale Y' sensiblement perpendiculaire à la direction longitudinale X' et sensiblement horizontale, ainsi qu'une direction verticale Z'.

L'objet 5 présente une surface inférieure 12 gauche, possédant une courbure selon la direction longitudinale X' et selon la direction transversale Y'.

Chaque trou d'homme 10 (figure 2) est par exemple obtenu par découpage à l'aide d'une machine à jet d'eau à haute pression (non représentée) permettant d'enlever un morceau de matière 14. Chaque trou d'homme 10 a par exemple une forme elliptique représentée sur la figure 4.

Le pourtour de chaque trou d'homme 10 définit une surface à usiner 16 (figure 2). Dans l'exemple représenté, le but de l'usinage est de retirer une portion de matière 18 tout autour du trou d'homme 10, afin de réaliser un épaulement 20.

Il est à noter que, sur la figure 2, l'objet 5 a été représenté rectiligne par souci de simplification. Il présente en fait, comme indiqué ci-dessus, une courbure selon la direction longitudinale X' et selon la direction transversale Y'.

Comme visible sur la figure 1, l'installation 1 comprend des portiques 22 pour soutenir l'objet 5, un rail 24, un bras articulé 26 monté sur le rail, et une machine d'usinage 28 portée par le bras articulé.

L'installation 1 comporte aussi un système de contrôle 31 adapté pour contrôler le bras articulé 26 et la machine d'usinage 28.

Le rail 24 est par exemple situé transversalement entre les portiques 22. Le rail 24 s'étend selon la direction longitudinale X' en dessous de l'objet 5.

Le bras articulé 26 est adapté pour être déplacé par le système de contrôle 31 en translation sur le rail 24. Le bras articulé 26 est avantageusement adapté pour déplacer la machine d'usinage 28 par rapport à l'objet 5 en translation selon les trois directions X', Y', Z', et en inclinaison autour des directions X' et Y'.

La machine d'usinage 28 comprend un caisson 30 définissant une ouverture 32 et destiné à être placé par le bras articulé 26 dans une position d'usinage (figure 1), dans laquelle l'ouverture 32 est située en vis-à-vis de la surface à usiner 16.

L'ouverture 32 s'étend par exemple dans un plan P perpendiculaire à une direction Z qui est avantageusement verticale lorsque le bras articulé 26 est dans une position neutre (non représentée).

L'ouverture 32 est par exemple rectangulaire dans le plan P, et ses bords définissent une direction X et une direction Y sensiblement perpendiculaires entre elles et à la direction Z.

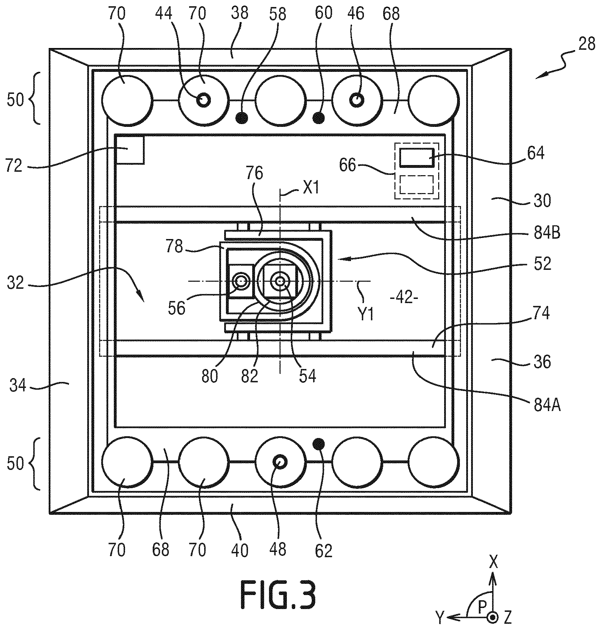

Le caisson 30 a par exemple une forme générale sensiblement parallélépipédique, avec deux faces latérales 34, 36 (figure 3) opposées selon la direction Y et parallèles à la direction X, et deux faces latérales 38, 40 opposées selon la direction X et sensiblement parallèles à la direction Y. Le caisson 30 comporte également un fond 42 s'étendant perpendiculairement à la direction Z et opposé à l'ouverture 32 selon cette même direction.

La machine d'usinage 28 comprend également trois appuis 44, 46, 48 solidaires du caisson 30 et destinés à appuyer sur la surface à usiner 16 dans la position d'usinage, un système d'attache 50 pour fixer le caisson sur la surface à usiner, un support 52 monté mobile par rapport au caisson, un outil d'usinage 54 adapté pour être monté sur le support 52, et un capteur de position 56 également monté sur le support.

La machine d'usinage 28 comporte optionnellement trois télémètres 58, 60, 62, et un palpeur 64 adapté pour être monté sur le support 52, de préférence sensiblement au même endroit que l'outil d'usinage 54.

L'outil d'usinage 54 et le palpeur 64 sont prévus pour être montés sur le support 52 ou stockés dans un magasin 66, avantageusement situé dans le caisson 30.

En variante (non représentée), le magasin 66 est situé à l'extérieur de la machine d'usinage 28.

Les trois appuis 44, 46, 48 sont équipés de jauges de contrainte 44A, 46A, 48A adaptées pour mesurer des forces de pression F1, F2, F3 (figure 4) exercées respectivement par les appuis sur la surface à usiner 16. Les appuis 44, 46, 48 font par exemple saillie selon la direction Z à partir d'un rebord 68 du caisson 30. Par exemple, les appuis 44, 46 sont alignés selon la direction Y et situés du côté de la face 38 du caisson par rapport à l'ouverture 32. Par exemple, l'appui 48 est situé de l'autre côté de l'ouverture 32 par rapport aux appuis 44, 46 selon la direction X. Comme visible sur la figure 4, les appuis 44, 46, 48 forment avantageusement un triangle isocèle en vue selon la direction Z.

Dans cet exemple de réalisation de l'invention, le système d'attache 50 comprend des ventouses 70 solidaires du caisson 30 et adaptées pour être plaquées sur la surface à usiner 16 dans la position d'usinage, et un organe déprimogène 72 pour créer sélectivement une dépression entre les ventouses et la surface à usiner.

Les ventouses 70 s'organisent par exemple selon deux rangées disposées de part et d'autre de l'ouverture 32 selon la direction X, les rangées étant sensiblement parallèles à la direction Y. Chaque rangée comporte par exemple cinq ventouses. Avantageusement, trois des ventouses 70 sont situées autour des appuis 44, 46, 48. Dit autrement, les appuis 44, 46, 48 sont situés respectivement au centre de trois des ventouses 70 en vue selon la direction Z.

L'organe déprimogène 72 est relié à chacune des ventouses 70 par un réseau fluidique (non représenté).

Selon d'autres exemples de réalisation de l'invention, le système d'attache 50 utilise des moyens d'attache adaptés au matériau à usiner. Par exemple, pour une surface en acier, le système d'attache 50 peut utiliser des électroaimants.

Le capteur de position 56 comporte par exemple une caméra comprenant un laser pour une meilleure précision de contrôle de forme.

Les télémètres 58, 60 sont par exemple situés d'un côté de l'ouverture 32 selon la direction X et sont sensiblement alignés selon la direction Y. Le télémètre 62 est par exemple situé de l'autre côté de l'ouverture 32 par rapport au télémètre 58, 60 selon la direction X. Les télémètres 58, 60, 62 sont adaptés pour fournir respectivement au moins trois paramètres de distance, chaque paramètre de distance étant respectivement représentatif d'une distance D1, D2, D3 (figure 2) entre l'un des télémètres et la surface à usiner 16 selon la direction Z.

Le support 52 est adapté pour déplacer l'outil d'usinage 54 ou le palpeur 64 par rapport au caisson 30 en translation selon les trois directions X, Y, Z et avantageusement en inclinaison par rapport aux directions X et Y. Avantageusement, le support 52 est également adapté pour aller chercher l'outil d'usinage 54 ou le palpeur 64 dans le magasin 66, ou pour les replacer dans le magasin.

Dans l'exemple représenté, le support 52 comprend une première partie 74 montée mobile en translation sur le caisson 30 selon la direction X, une deuxième partie 76 montée mobile en translation sur la première partie selon la direction Y, et une troisième partie 78 montée mobile en translation sur la deuxième partie selon la direction Z. Le support 52 comprend aussi une quatrième partie 80 montée rotative sur la troisième partie autour d'un axe X1 sensiblement parallèle à la direction X, et une cinquième partie 82 montée rotative sur la quatrième partie autour d'un axe Y1 solidaire de la quatrième partie et sensiblement parallèle à la direction Y dans une position de repos du support représentée sur la figure 3.

La première partie 74 comporte par exemple deux poutres 84A, 84B s'étendant selon la direction Y et entre lesquelles est montée la deuxième partie 76.

Le capteur de position 56 est par exemple solidaire de la quatrième partie 80.

L'outil d'usinage 54, ou le palpeur 64, sont montés sur la cinquième partie 82.

Le système de contrôle 31 comprend par exemple un processeur 86, une mémoire 88, et avantageusement une interface homme/machine 90.

La mémoire 88 est adaptée pour stocker des informations relatives à la forme des trous d'homme 10, et des instructions logicielles qui, lorsqu'elles sont exécutées par le processeur 86, permettent de piloter le bras articulé 26, le support 52, et le capteur de position 56, en provenance du capteur de position 56, et des télémètres 58, 60, 62.

Le système de contrôle 31 est également adapté pour recevoir les paramètres de position en provenance du capteur de position 56, les paramètres de distance en provenance des télémètres 58, 60, 62, et des informations en provenance du palpeur 64.

Le fonctionnement de l'installation 1 va maintenant être décrit, ce fonctionnement illustrant un procédé selon l'invention.

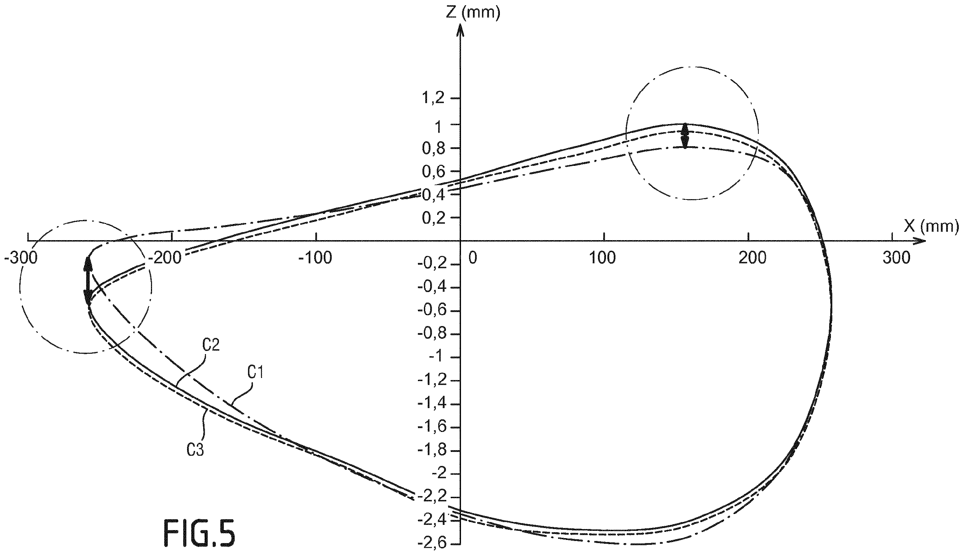

Le procédé comprend un placement du caisson 30 par le bras articulé 26 dans la position d'usinage, une fixation du caisson sur la surface à usiner 16 par le système d'attache 50, la fourniture, par le capteur de position 56, de paramètres de position représentatifs de la position relative de la surface à usiner par rapport au caisson dans la position d'usinage, un calcul, par le système de contrôle 31, d'une consigne de déplacement C2 (figure 5) de l'outil d'usinage 54 en utilisant les paramètres de position, et un actionnement par le système de contrôle 31 du support 52 et un déplacement de l'outil d'usinage par rapport au caisson selon la consigne de déplacement calculée.

Le placement du caisson 30 dans la position d'usinage comprend optionnellement un positionnement grossier du bras articulé 26, puis une phase d'approche du caisson, et enfin une phase d'atterrissage de la machine d'usinage 28 sur l'objet 5.

Le positionnement grossier consiste à déplacer le bras articulé 26 pour que le trou d'homme 10 à usiner soit à la portée de la machine d'usinage 28. Dans l'exemple représenté, le système de contrôle 31 déplace le bras articulé 26 en translation sur le rail 24 pour mettre le bras articulé sensiblement en dessous du trou d'homme, comme représenté sur la figure 1. La machine d'usinage 28 est alors, par exemple, à environ 50 mm de l'objet 5.

Pendant la phase d'approche, les télémètres 58, 60, 62 fournissent les paramètres représentatifs des distances D1, D2, D3 permettant de contrôler le parallélisme entre l'ouverture 32 et un plan moyen P' de la surface à usiner 16. Par exemple, le système de contrôle 31 calcule, à partir de ces paramètres, un angle θ entre la direction Z (qui est fixe par rapport au caisson 30) et le plan moyen P'. Dans l'exemple représenté, un angle θ de 90° représente un parallélisme parfait. Plus l'angle θ diminue, plus le caisson 30 s'écarte du parallélisme.

Le système de contrôle 31 déplace le caisson 30 de manière à ce que l'angle θ ne s'écarte pas trop de 90°, c'est-à-dire de manière à ce que le plan P et le plan moyen P' restent à peu près parallèles.

En variante, la phase d'approche est réalisée en pilotant un autre paramètre représentatif du parallélisme entre les plans P et P' autre que l'angle θ.

Selon une autre variante encore (non représentée), l'installation 1 est dépourvue de télémètres, et une approche directe est réalisée sans contrôle particulier du parallélisme.

Optionnellement, pendant la phase d'approche du caisson, le capteur de position 56 est utilisé et un ou plusieurs paramètres de position du caisson 30 par rapport à la surface à usiner 16 sont calculés. Le système de contrôle 31 évalue le ou les paramètres de position et, si ces derniers ne sont pas conformes à des critères prédéfinis, un pilotage du bras articulé 26 est réalisé pour corriger la position du caisson 30 par rapport à la surface à usiner 16. Ceci permet de recentrer le trou d'homme 10 entre les appuis 44, 46, 48 comme représenté sur la figure 4.

Pendant la phase d'approche, plusieurs recentrages peuvent avoir lieu.

Toujours pendant la phase d'approche, et optionnellement, le trou d'homme 10 est reconnu par la caméra du capteur de position 56 et des données concernant le trou d'homme 10 et présentant la mémoire 88 du système de contrôle sont activées. Il s'agit par exemple de données concernant la forme théorique du trou d'homme 10.

La phase d'atterrissage comprend une application des trois appuis 44, 46, 48 sur la surface à usiner 16, et la mesure par les jauges de contrainte 44A, 46A, 48A des forces de pression F1, F2, F3 exercées par les appuis sur la surface à usiner.

Le bras articulé 26 est actionné pour mettre en pression les trois appuis 44, 46, 48 dans lesquels se trouvent les jauges de contrainte 44A, 46A, 48A. Les valeurs fournies par les jauges de contrainte 44A, 46A, 48A sont surveillées par le système de contrôle 31. Avantageusement, quel que soit l'appui touchant en premier la surface à usiner 16, la poussée exercée par le bras articulé 26 est interrompue si une jauge de contrainte donne une force de pression supérieure à une valeur prédéfinie, par exemple 15 kg.

Avantageusement, l'application des trois appuis 44, 46, 48 est réalisée successivement. Par exemple, si l'appui 44 touche en premier la surface à usiner 16, on charge l'appui 44 jusqu'à ce que la force de pression F1 atteigne une valeur prédéfinie, de par exemple 11 kg.

Ensuite, le bras articulé 26 fait tourner le caisson 30 autour du point d'appui 44 jusqu'à ce qu'un deuxième appui, par exemple l'appui 46, touche la surface à usiner et que la force de pression F2 mesurée par la jauge de contrainte 46A atteigne une valeur prédéfinie, de par exemple onze kilogrammes. La rotation du caisson 30 autour de l'appui 44 est par exemple effectuée autour d'un axe Δ1 passant par l'appui 44 et par l'appui 48.

Enfin, le troisième appui, c'est-à-dire l'appui 48 dans l'exemple, est mis en contact avec la surface à usiner 16 en déplaçant le caisson 30 en rotation autour d'un axe Δ2 passant par les appuis 44 et 46. La rotation est interrompue lorsque la force de pression F3 mesurée atteint une valeur prédéfinie, de par exemple 11 kg.

En variante, bien évidemment, il est possible de mettre en contact les appuis 44, 46, 48 dans un ordre différent, la procédure d'application des appuis sur la surface à usiner 16 se déduisant par permutation circulaire de celle décrite ci-dessus.

Une telle procédure d'application des appuis 44, 46, 48 permet d'obtenir une grande reproductibilité dans la manière dont la machine d'usinage 28 est appliquée sur la surface à usiner 16, et permet de minimiser la déformation du pourtour du trou d'homme 10 due à cette application.

Dans l'exemple représenté, à l'issue de la phase d'atterrissage, les ventouses 70 sont en contact avec la surface à usiner 16. L'organe déprimogène 72 crée alors une dépression entre chacune des ventouses 70 et la surface à usiner 16 par aspiration de l'air interstitiel. Le caisson 30 est alors solidement fixé sur la surface à usiner 16.

Le capteur de position 56 fournit alors des paramètres de position représentatifs de la position relative de la surface à usiner 16 par rapport au caisson 30 dans la position d'usinage. Par exemple, si le trou d'homme 10 est une ellipse tracée sur une surface gauche présentant une double courbure, six points A1 à A6 (figure 4) sont repérés par le capteur de position 56 sur le pourtour du trou d'homme 10. Ceci permet par exemple de retrouver le centre de l'ellipse en X et Y. Par le repérage de trois autres points par le capteur de position 56 au plus près des appuis 44, 46 et 48, le capteur de position 56 mesure par triangulation une hauteur moyenne en Z du plan P' de la surface à usiner

Ceci permet de calculer une consigne de déplacement de l'outil d'usinage 54 suivant les directions X, Y, Z.

La consigne de déplacement est par exemple un paramétrage des translations de l'outil d'usinage 54 à réaliser selon les directions X, Y, Z, et des modifications d'orientation par le support 52.

Avantageusement, un palpage est effectué pour corriger la consigne de déplacement de l'outil d'usinage 54. Pour ce faire, le palpeur 64 est monté initialement sur le support 52 à l'emplacement où l'outil d'usinage 54 sera ultérieurement monté.

Puis, le support 52 est déplacé par le système de contrôle 31 par rapport au caisson 30, et un calcul de paramètres de forme représentatifs de la forme réelle du trou d'homme 10 est réalisé par le système de contrôle 31. Par exemple, un certain nombre de points de palpage sont réalisés, avantageusement environ vingt. Les coordonnées de ces points de palpage en X, Y, Z permettent de calculer une courbe de type Spline qui sert ensuite de référence pour mettre à jour le parcours de l'outil d'usinage 54 suivant l'axe Z et gagner en précision d'usinage.

Ceci permet de corriger la consigne de déplacement de l'outil d'usinage 54 en utilisant les paramètres de forme.

Ensuite, le support 52 replace le palpeur 64 dans le magasin 66 et saisit l'outil d'usinage 54 stocké dans le magasin. L'outil d'usinage 54 est alors monté sur le support 52 là où se trouvait le palpeur 64.

L'usinage proprement dit a alors lieu. Le système de contrôle 31 actionne le support 52 pour déplacer l'outil d'usinage 54 par rapport au caisson 30 selon la consigne de déplacement corrigée.

Selon une variante non représentée, le magasin 66 se situe à l'extérieur du caisson 30. Pour remplacer le palpeur 64 par l'outil d'usinage 54, le caisson 30 est éloigné de la surface à usiner 16 par le système de contrôle 31 pour réaliser la substitution.

Le bras articulé 26 replace ensuite le caisson 30 dans la position d'usinage selon la procédure décrite ci-dessus, assurant une reproductibilité du placement. L'usinage est alors réalisé après le deuxième placement dans la position d'usinage.

La figure 5 montre des consignes de déplacement C1 et C2 en projection sur les directions X et Z liées au caisson 30. Ces consignes de déplacement peuvent être vues comme des points successifs occupés par l'outil d'usinage 54 au cours de son déplacement pour usiner le trou d'homme 10.

La coordonnée X oscille entre +250 mm et -250 mm environ, ce qui représente l'extension du trou d'homme selon la direction X. Le fait que la coordonnée Z soit égale à quelques millimètres en positif ou en négatif illustre le caractère gauche de la surface à usiner 16.

La consigne de déplacement C1 est une consigne calculée à partir des paramètres de forme fournis par le capteur de position 56, mais sans correction permise par un palpage. La courbe C3 représente la forme réelle du pourtour du trou d'homme 10 à usiner. Comme on peut le constater, la courbe C1 diffère à certains endroits de plus de 0,25 mm selon la direction Z de la courbe C3. De telles erreurs de positionnement sont acceptables pour certaines applications, mais en général pas en aéronautique, c'est pourquoi une correction par palpage est avantageusement réalisée.

La courbe C2 est la projection sur les directions X et Z de la consigne de déplacement corrigée à la suite du palpage. Comme on peut le constater, la courbe C2 est beaucoup plus proche de la courbe C3 que ne l'est la courbe C1. Ainsi, le palpage permet de réduire les erreurs à des valeurs faibles (inférieures à 0,1 mm selon la direction Z) tout-à-fait acceptables dans l'aéronautique.

Ainsi, grâce aux caractéristiques décrites ci-dessus, l'installation 1 est rapide et permet de respecter les tolérances d'usinage.

En outre, la caractéristique optionnelle selon laquelle un palpage est réalisé permet d'obtenir une consigne de déplacement plus précise, réduisant encore les erreurs d'usinage.

La caractéristique optionnelle selon laquelle le caisson 30 est équipé de télémètres permet un contrôle du parallélisme entre le caisson et la surface à usiner 16 pendant la phase d'approche.

Enfin, la présence du magasin 66 dans le caisson 30 permet de laisser le caisson dans la position d'usinage pendant que le palpeur 64 est remplacé par l'outil d'usinage 54 après que le palpage a été effectué.

Par « solidaires du caisson », on entend par exemple que les appuis sont fixes par rapport au caisson.

## Revendications

1. Installation (1) pour usiner un objet (5), notamment une partie d'aile d'avion, l'objet (5) définissant une surface à usiner (16), par exemple le pourtour (18) d'un trou d'homme (10), l'installation (1) comportant un bras articulé (26), et une machine d'usinage (28) portée par le bras articulé (26) et comportant :
- un caisson (30) définissant au moins une ouverture (32) et destiné à être placé par le bras articulé (26) dans une position d'usinage dans laquelle l'ouverture (32) est située en vis-à-vis de la surface à usiner (16),
- au moins trois appuis (44, 46, 48) solidaires du caisson (30) et destinés à appuyer sur la surface à usiner (16) dans la position d'usinage,
- un système d'attache (50) pour fixer le caisson (30) sur la surface à usiner (16),
- au moins un support (52) monté mobile par rapport au caisson (30), et un outil d'usinage (54) adapté pour être monté sur le support (52), et
- au moins un capteur de position (56), par exemple une caméra, adapté pour fournir des paramètres de position représentatifs d'une position relative de la surface à usiner (16) par rapport au caisson (30),
l'installation (1) comportant en outre un système de contrôle (31) adapté pour actionner le support (52) et déplacer l'outil d'usinage (54) par rapport au caisson (30) selon une consigne de déplacement (C1, C2), le système de contrôle (31) étant adapté pour calculer la consigne de déplacement (C1, C2) en utilisant les paramètres de position.

2. Installation (1) selon la revendication 1, dans laquelle les appuis (44, 46, 48) sont équipés respectivement de jauges de contrainte (44A, 46A, 48A) adaptées pour mesurer des forces de pression (F1, F2, F3) exercées respectivement par les appuis (44, 46, 48) sur la surface à usiner (16).

3. Installation (1) selon la revendication 1 ou 2, dans laquelle le système d'attache (50) comporte au moins trois ventouses (70) solidaires du caisson (30) et adaptées pour être plaquées sur la surface à usiner (16) dans la position d'usinage, et au moins un organe déprimogène (72) pour créer sélectivement une dépression entre les ventouses (70) et la surface à usiner (16).

4. Installation (1) selon l'une quelconque des revendications 1 à 3, dans laquelle la machine d'usinage (28) comporte en outre au moins trois télémètres (58, 60, 62) adaptés pour fournir respectivement au moins trois paramètres de distance, chaque paramètre de distance étant respectivement représentatif d'une distance (D1, D2, D3) entre l'un des télémètres (58, 60, 62) et la surface à usiner (16).

5. Installation (1) selon la revendication 3, dans laquelle les trois appuis (44, 46, 48) sont situés respectivement sensiblement au centre des trois ventouses (70).

6. Installation (1) selon l'une quelconque des revendications 1 à 5, comportant en outre au moins un palpeur adapté (54) pour être monté sur le support (52), de préférence sensiblement au même endroit que l'outil d'usinage (54), le système de contrôle (31) étant adapté pour déplacer le support (52) et le palpeur (54) pour palper la surface à usiner (16) et calculer des paramètres de forme représentatifs d'une forme de la surface à usiner (16), le système de contrôle (31) étant en outre adapté pour calculer la consigne de déplacement (C2) de l'outil d'usinage (54) en tenant compte des paramètres de forme, l'installation (1) comportant de préférence un magasin (66) adapté pour recevoir le palpeur (54) ou l'outil d'usinage (54) dans des positions de rangement respectives.

7. Procédé pour usiner un objet (5), notamment une partie d'aile d'avion, l'objet (5) définissant une surface à usiner (16), par exemple le pourtour (18) d'un trou d'homme (10), le procédé comportant les étapes suivantes :
- fourniture d'un bras articulé (26), d'une machine d'usinage (28) portée par le bras articulé (26), et d'un système de contrôle (31), la machine d'usinage (28) comportant un caisson (30) définissant au moins une ouverture (32), au moins trois appuis (44, 46, 48) solidaires du caisson (30), un système d'attache (50), au moins un support (52) monté mobile par rapport au caisson (30), un outil d'usinage (54), et au moins un capteur de position (56), par exemple une caméra, monté sur le support (52) ;
- montage de l'outil d'usinage (54) sur le support (52) ;
- placement du caisson (30) par le bras articulé (26) dans une position d'usinage, dans laquelle l'ouverture (32) est située en vis-à-vis de la surface à usiner (16), le placement comportant une application des trois appuis (44, 46, 48) sur la surface à usiner (16) ;
- fixation du caisson (30) sur la surface à usiner (16) par le système d'attache (50),
- fourniture, par le capteur de position (56), de paramètres de position représentatifs d'une position relative de la surface à usiner (16) par rapport au caisson (30) dans la position d'usinage ;
- calcul, par le système de contrôle (31), d'une consigne de déplacement (C1, C2) de l'outil d'usinage en utilisant les paramètres de position ; et
- actionnement, par le système de contrôle (31), du support (52), et déplacement de l'outil d'usinage (54) par rapport au caisson (30) selon la consigne de déplacement (C1, C2) calculée.

8. Procédé selon la revendication 7, dans lequel, lors de l'application des trois appuis (44, 46, 48) sur la surface à usiner (16), des jauges de contrainte (44A, 46A, 48A) mesurent des forces de pression (F1, F2, F3) exercées respectivement par les appuis (44, 46, 48) sur la surface à usiner (16) et, dans lequel, lors de la fixation du caisson (30) sur la surface à usiner (16), des ventouses (70) sont appliquées sur la surface à usiner (16).

9. Procédé selon la revendication 8, dans lequel :
- la machine d'usinage (28) fournie comporte au moins trois télémètres (58, 60, 62) ;
- le placement du caisson (30) comporte la fourniture d'au moins trois paramètres de distance respectivement par les télémètres (58, 60, 62), chaque paramètre de distance étant respectivement représentatif d'une distance (D1, D2, D3) entre l'un des télémètres (58, 60, 62) et la surface à usiner (16).

10. Procédé selon la revendication 9, dans lequel ledit placement du caisson (30) comprend :
- dans une phase d'approche du caisson (30), un calcul, par le système de contrôle (31), d'au moins un paramètre représentatif d'une orientation du caisson (30) par rapport à la surface à usiner (16), le calcul utilisant lesdits paramètres de distance ; un pilotage du bras articulé (26) par le système de contrôle (31) tenant compte du paramètre d'orientation ; et optionnellement une utilisation du capteur de position (56), un calcul d'au moins un paramètre de position du caisson (30) par rapport à la surface à usiner (16), et un pilotage du bras articulé (26) par le système de contrôle (31) en fonction du paramètre de position ; et/ou
- une mise en contact d'un premier des appuis (44, 46, 48) avec la surface à usiner, puis une mise en contact d'un deuxième des appuis (44, 46, 48), le premier appui restant en contact, ensuite une mise en contact du troisième des appuis (44, 46, 48), les deux autres des appuis (44, 46, 48) restant en contact, chacune des mises en contact étant de préférence réalisée pour que ladite force de pression (F1, F2, F3) correspondante atteigne progressivement une valeur prédéterminée.

11. Procédé selon l'une quelconque des revendications 7 à 10, comprenant en outre :
- un montage d'un palpeur (64) sur le support (52), de préférence sensiblement au même endroit que l'outil d'usinage (54) ; et
- après le placement du caisson (30) dans la position d'usinage, un palpage de la surface à usiner (16) comportant : un déplacement du support (52) et du palpeur (64) par rapport au caisson (30) par le système de contrôle (31) ; et un calcul, par le système de contrôle (31), de paramètres de forme représentatifs d'une forme de la surface à usiner (16) ;
le calcul de la consigne de déplacement de l'outil d'usinage (54) par le système de contrôle (31) utilisant les paramètres de forme.

12. Procédé selon la revendication 11, dans lequel :
- le palpage a lieu après ladite fixation du caisson (30) sur la surface à usiner (16) et avant le montage de l'outil d'usinage (54) sur le support (52) ; et
- le caisson (30) reste fixé sur la surface à usiner (16) pendant le montage de l'outil d'usinage (54) sur le support (52) ;
la machine d'usinage (28) comportant de préférence un magasin (66) adapté pour recevoir le palpeur (64) ou l'outil d'usinage (54) dans des positions de rangement respectives.

13. Procédé selon la revendication 12, dans lequel, après le palpage, le caisson (30) est éloigné de la surface à usiner (16) par le bras articulé (26), le palpeur (64) est démonté du support (52), puis le montage de l'outil d'usinage (54) sur le support (52) est effectué, et un autre placement du caisson (30) est réalisé pour remettre le caisson (30) dans la position d'usinage.

## Patentansprüche

1. Anlage (1) zum Bearbeiten eines Objekts (5), insbesondere eines Teils einer Flugzeugtragfläche, wobei das Objekt (5) eine zu bearbeitende Oberfläche (16) definiert, beispielsweise den Umfang (18) eines Mannlochs (10), wobei die Anlage (1) einen Gelenkarm (26) und eine Bearbeitungsmaschine (28) umfasst, die von dem Gelenkarm (26) getragen wird und Folgendes umfasst:
- einen Kasten (30), der mindestens eine Öffnung (32) definiert und dazu bestimmt ist, durch den Gelenkarm (26) in eine Bearbeitungsposition gebracht zu werden, in der sich die Öffnung (32) gegenüber der zu bearbeitenden Oberfläche (16) befindet,
- mindestens drei Auflager (44, 46, 48), die fest mit dem Kasten (30) verbunden sind und dazu bestimmt sind, in der Bearbeitungsposition auf die zu bearbeitende Oberfläche (16) zu drücken,
- ein Befestigungssystem (50) zum Befestigen des Kastens (30) an der zu bearbeitenden Oberfläche (16),
- mindestens einen Träger (52), der in Bezug auf den Kasten (30) beweglich montiert ist, und ein Bearbeitungswerkzeug (54), das dazu ausgelegt ist, an dem Träger (52) montiert zu werden, und
- mindestens einen Positionssensor (56), beispielsweise eine Kamera, der so beschaffen ist, dass er Positionsparameter bereitstellt, die für eine relative Position der zu bearbeitenden Oberfläche (16) in Bezug auf den Kasten (30) repräsentativ sind,
wobei die Anlage (1) ferner ein Steuerungssystem (31) umfasst, das dazu ausgelegt ist, den Träger (52) zu betätigen und das Bearbeitungswerkzeug (54) relativ zu dem Kasten (30) gemäß einem Bewegungssollwert (C1, C2) zu bewegen, wobei das Steuerungssystem (31) dazu ausgelegt ist, den Bewegungssollwert (C1, C2) unter Verwendung der Positionsparameter zu berechnen.

2. Anlage (1) nach Anspruch 1, wobei die Auflager (44, 46, 48) jeweils mit Dehnungsmessstreifen (44A, 46A, 48A) ausgestattet sind, die dazu ausgelegt sind, Druckkräfte (F1, F2, F3) zu messen, die jeweils von den Auflagern (44, 46, 48) auf die zu bearbeitende Oberfläche (16) ausgeübt werden.

3. Anlage (1) nach Anspruch 1 oder 2, wobei das Befestigungssystem (50) mindestens drei Saugnäpfe (70) umfasst, die fest mit dem Kasten (30) verbunden sind und dazu ausgelegt sind, in der Bearbeitungsposition an die zu bearbeitende Oberfläche (16) angedrückt zu werden, und mindestens ein Unterdruckorgan (72), um selektiv einen Unterdruck zwischen den Saugnäpfen (70) und der zu bearbeitenden Oberfläche (16) zu erzeugen.

4. Anlage (1) nach einem der Ansprüche 1 bis 3, wobei die Bearbeitungsmaschine (28) außerdem mindestens drei Entfernungsmesser (58, 60, 62) umfasst, die jeweils mindestens drei Abstandsparameter bereitstellen können, wobei jeder Abstandsparameter jeweils für einen Abstand (D1, D2, D3) zwischen einem der Entfernungsmesser (58, 60, 62) und der zu bearbeitenden Oberfläche (16) repräsentativ ist.

5. Anlage (1) nach Anspruch 3, wobei die drei Auflager (44, 46, 48) jeweils im Wesentlichen in der Mitte der drei Saugnäpfe (70) angeordnet sind.

6. Anlage (1) nach einem der Ansprüche 1 bis 5, ferner umfassend mindestens einen Taster (54), der dazu ausgelegt ist, an dem Träger (52) angebracht zu werden, vorzugsweise im Wesentlichen an der gleichen Stelle wie das Bearbeitungswerkzeug (54), wobei das Steuerungssystem (31) dazu ausgelegt ist, den Träger (52) und den Taster (54) zu bewegen, um die zu bearbeitende Oberfläche (16) abzutasten und Formparameter zu berechnen, die für eine Form der zu bearbeitenden Oberfläche (16) repräsentativ sind, wobei das Steuerungssystem (31) ferner dazu ausgelegt ist, den Bewegungssollwert (C2) des Bearbeitungswerkzeugs (54) unter Berücksichtigung der Formparameter zu berechnen, wobei die Anlage (1) vorzugsweise ein Lager (66) umfasst, das dazu ausgelegt ist, den Taster (54) oder das Bearbeitungswerkzeug (54) in jeweiligen Aufbewahrungspositionen aufzunehmen.

7. Verfahren zum Bearbeiten eines Objekts (5), insbesondere eines Teils einer Flugzeugtragfläche, wobei das Objekt (5) eine zu bearbeitende Oberfläche (16), beispielsweise den Umfang (18) eines Mannlochs (10), definiert, wobei das Verfahren die folgenden Schritte umfasst:
- Bereitstellung eines Gelenkarms (26), einer Bearbeitungsmaschine (28), die von dem Gelenkarm (26) getragen wird, und eines Steuerungssystems (31), wobei die Bearbeitungsmaschine (28) einen Kasten (30), der mindestens eine Öffnung (32) definiert, mindestens drei Auflager (44, 46, 48), die fest mit dem Kasten (30) verbunden sind, ein Befestigungssystem (50), mindestens einen Träger (52), der in Bezug auf den Kasten (30) beweglich montiert ist, ein Bearbeitungswerkzeug (54) und mindestens einen Positionssensor (56), zum Beispiel eine Kamera, der auf dem Träger (52) montiert ist, umfasst;
- Montage des Bearbeitungswerkzeugs (54) auf dem Träger (52);
- Platzierung des Kastens (30) durch den Gelenkarm (26) in einer Bearbeitungsposition, wobei sich die Öffnung (32) gegenüber der zu bearbeitenden Oberfläche (16) befindet, wobei die Platzierung das Anlegen der drei Auflager (44, 46, 48) an die zu bearbeitende Oberfläche (16) umfasst;
- Befestigung des Kastens (30) an der zu bearbeitenden Oberfläche (16) durch das Befestigungssystem (50),
- Bereitstellung, durch den Positionssensor (56), von Positionsparametern, die eine relative Position der zu bearbeitenden Oberfläche (16) in Bezug auf den Kasten (30) in der Bearbeitungsposition darstellen;
- Berechnung eines Bewegungssollwerts (C1, C2) für das Bearbeitungswerkzeug durch das Steuerungssystem (31) unter Verwendung der Positionsparameter; und
- Betätigung, durch das Steuerungssystem (31), des Trägers (52) und Bewegung des Bearbeitungswerkzeugs (54) relativ zum Kasten (30) gemäß dem berechneten Bewegungssollwert (C1, C2).

8. Verfahren nach Anspruch 7, wobei beim Anlegen der drei Auflager (44, 46, 48) an die zu bearbeitende Oberfläche (16) Dehnungsmessstreifen (44A, 46A, 48A) Druckkräfte (F1, F2, F3) messen, die jeweils von den Auflagern (44, 46, 48) auf die zu bearbeitende Oberfläche (16) ausgeübt werden, und wobei beim Befestigen des Kastens (30) an der zu bearbeitenden Oberfläche (16) Saugnäpfe (70) an die zu bearbeitende Oberfläche (16) angelegt werden.

9. Verfahren nach Anspruch 8, wobei:
- die bereitgestellte Bearbeitungsmaschine (28) mindestens drei Entfernungsmesser (58, 60, 62) umfasst;
- die Platzierung des Kastens (30) die Bereitstellung von mindestens drei Abstandsparametern jeweils durch die Entfernungsmesser (58, 60, 62) umfasst, wobei jeder Abstandsparameter jeweils repräsentativ für einen Abstand (D1, D2, D3) zwischen einem der Entfernungsmesser (58, 60, 62) und der zu bearbeitenden Oberfläche (16) ist.

10. Verfahren nach Anspruch 9, wobei das Platzieren des Kastens (30) Folgendes umfasst:
- in einer Annäherungsphase des Kastens (30), Berechnung durch das Steuerungssystem (31) von mindestens einem Parameter, der eine Ausrichtung des Kastens (30) in Bezug auf die zu bearbeitende Oberfläche (16) darstellt, wobei die Berechnung die Abstandsparameter verwendet; eine Ansteuerung des Gelenkarms (26) durch das Steuerungssystem (31) unter Berücksichtigung des Ausrichtungsparameters; und optional eine Verwendung des Positionssensors (56), eine Berechnung von mindestens einem Positionsparameter des Kastens (30) in Bezug auf die zu bearbeitende Oberfläche (16) und eine Ansteuerung des Gelenkarms (26) durch das Steuerungssystem (31) entsprechend dem Positionsparameter; und/oder
- eine Kontaktierung eines ersten der Auflager (44, 46, 48) mit der zu bearbeitenden Oberfläche, dann eine Kontaktierung eines zweiten der Auflager (44, 46, 48), wobei das erste Auflager in Kontakt bleibt, dann eine Kontaktierung des dritten der Auflager (44, 46, 48), wobei die beiden anderen der Auflager (44, 46, 48) in Kontakt bleiben, wobei jede der Kontaktierungen vorzugsweise so ausgeführt wird, dass die entsprechende Druckkraft (F1, F2, F3) allmählich einen vorgegebenen Wert erreicht.

11. Verfahren nach einem der Ansprüche 7 bis 10, ferner umfassend:
- eine Montage eines Tasters (64) an dem Träger (52), vorzugsweise im Wesentlichen an derselben Stelle wie das Bearbeitungswerkzeug (54); und
- nach dem Platzieren des Kastens (30) in der Bearbeitungsposition, eine Abtastung der zu bearbeitenden Oberfläche (16), die Folgendes umfasst: eine Bewegung des Trägers (52) und des Tasters (64) in Bezug auf den Kasten (30) durch das Steuerungssystem (31); und eine Berechnung von Formparametern, die für eine Form der zu bearbeitenden Oberfläche (16) repräsentativ sind, durch das Steuerungssystem (31);
wobei zur Berechnung des Bewegungssollwerts für das Bearbeitungswerkzeug (54) durch das Steuerungssystem (31) die Formparameter verwendet werden.

12. Verfahren nach Anspruch 11, wobei:
- die Abtastung nach dem Befestigen des Kastens (30) an der zu bearbeitenden Oberfläche (16) und vor der Montage des Bearbeitungswerkzeugs (54) an dem Träger (52) erfolgt; und
- der Kasten (30) an der zu bearbeitenden Oberfläche (16) befestigt bleibt, während das Bearbeitungswerkzeug (54) an dem Träger (52) montiert wird;
wobei die Bearbeitungsmaschine (28) vorzugsweise ein Lager (66) umfasst, das dazu ausgelegt ist, den Taster (64) oder das Bearbeitungswerkzeug (54) in jeweiligen Aufbewahrungspositionen aufzunehmen.

13. Verfahren nach Anspruch 12, wobei der Kasten (30) nach der Abtastung durch den Gelenkarm (26) von der zu bearbeitenden Oberfläche (16) wegbewegt wird, der Taster (64) von dem Träger (52) abgenommen wird, dann die Montage des Bearbeitungswerkzeugs (54) an dem Träger (52) erfolgt und eine weitere Platzierung des Kastens (30) durchgeführt wird, um den Kasten (30) wieder in die Bearbeitungsposition zu bringen.

## Claims

1. Unit (1) for machining an object (5), in particular an aircraft wing portion, the object (5) defining a surface to be machined (16), for example the perimeter (18) of a manhole (10), the unit (1) comprising an articulated arm (26), and a machining apparatus (28) supported by the articulated arm (26) and comprising:
- a housing (30) defining at least one opening (32) and intended to be placed by the articulated arm (26) in a machining position in which the opening (32) is located facing the surface to be machined (16),
- at least three bearing points (44, 46, 48) rigidly connected to the housing (30) and intended to bear against the surface to be machined (16) in the machining position,
- an attachment system (50) for fastening the housing (30) to the surface to be machined (16),
- at least one support (52) mounted so as to be movable relative to the housing (30), and a machine tool (54) suitable for being mounted on the support (52), and
- at least one position sensor (56), for example a camera, suitable for providing position parameters representative of a relative position of the surface to be machined (16) with respect to the housing (30),
the unit (1) further comprising a control system (31) suitable for actuating the support (52) and moving the machine tool (54) relative to the housing (30) according to a movement instruction (C1, C2), the control system (31) being suitable for calculating the movement instruction (C1, C2) using the position parameters.

2. Unit (1) according to claim 1, wherein the bearing points (44, 46, 48) are provided with respective strain gauges (44A, 46A, 48A) suitable for measuring pressure forces (F1, F2, F3) exerted by the respective bearing points (44, 46, 48) on the surface to be machined (16).

3. Unit (1) according to either claim 1 or 2, wherein the attachment system (50) comprises at least three suction cups (70) rigidly connected to the housing (30) and suitable for being pressed against the surface to be machined (16) in the machining position, and at least one vacuum-producing member (72) for selectively creating a vacuum between the suction cups (70) and the surface to be machined (16).

4. Unit (1) according to any of claims 1 to 3, wherein the machining apparatus (28) further comprises at least three telemeters (58, 60, 62) suitable for providing at least three respective distance parameters, each distance parameter being representative of a relevant distance (D1, D2, D3) between one of the telemeters (58, 60, 62) and the surface to be machined (16).

5. Unit (1) according to claim 3, wherein the three bearing points (44, 46, 48) are located substantially at the center of the respective three suction cups (70).

6. Unit (1) according to any of claims 1 to 5, further comprising at least one sensing means (54) suitable for being mounted on the support (52), preferably substantially at the same location as the machine tool (54), the control system (31) being suitable for moving the support (52) and the sensing means (54) in order to sense the surface to be machined (16) and to calculate shape parameters representative of a shape of the surface to be machined (16), the control system (31) being further suitable for calculating the movement instruction (C2) of the machine tool (54), taking into account the shape parameters, the unit (1) preferably comprising a store (66) suitable for receiving the sensing means (54) or the machine tool (54) in respective storage positions.

7. Method for machining an object (5), in particular an aircraft wing portion, the object (5) defining a surface to be machined (16), for example the perimeter (18) of a manhole (10), the method comprising the following steps:
- providing an articulated arm (26), a machining apparatus (28) supported by the articulated arm (26), and a control system (31), the machining apparatus (28) comprising a housing (30) defining at least one opening (32), at least three bearing points (44, 46, 48) rigidly connected to the housing (30), an attachment system (50), at least one support (52) mounted so as to be movable relative to the housing (30), a machine tool (54), and at least one position sensor (56), for example a camera, mounted on the support (52);
- mounting the machine tool (54) on the support (52);
- placing the housing (30) by means of the articulated arm (26) in a machining position in which the opening (32) is located facing the surface to be machined (16), the placement comprising applying the three bearing points (44, 46, 48) against the surface to be machined (16);
- fastening the housing (30) to the surface to be machined (16) by means of the attachment system (50),
- providing, by means of the position sensor (56), position parameters representative of a relative position of the machine surface (16) with respect to the housing (30) in the machining position;
- calculating, by means of the control system (31), a movement instruction (C1, C2) of the machine tool using the position parameters; and
- actuating, by means of the control system (31), the support (52), and moving the machine tool (54) relative to the housing (30) according to the calculated movement instruction (C1, C2).

8. Method according to claim 7, wherein, when the three bearing points (44, 46, 48) are applied against the surface to be machined (16), strain gauges (44A, 46A, 48A) measure pressure forces (F1, F2, F3) exerted by the respective bearing points (44, 46, 48) on the surface to be machined (16), and wherein, when the housing (30) is fastened to the surface to be machined (16), suction cups (70) are applied against the surface to be machined (16).

9. Method according to claim 8 wherein:
- the machining apparatus (28) provided comprises at least three telemeters (58, 60, 62);
- the placement of the housing (30) comprises providing at least three distance parameters by means of the respective telemeters (58, 60, 62), each distance parameter being representative of a relevant distance (D1, D2, D3) between one of the telemeters (58, 60, 62) and the surface to be machined (16).

10. Method according to claim 9, wherein said placement of the housing (30) includes:
- in an approach phase of the housing (30), calculating, by means of the control system (31), at least one parameter representative of an orientation of the housing (30) relative to the surface to be machined (16), the calculation using said distance parameters; controlling the articulated arm (26) by means of the control system (31), taking into account the orientation parameter; and, optionally, using the position sensor (56), calculating at least one position parameter of the housing (30) relative to the surface to be machined (16), and controlling the articulated arm (26) by means of the control system (31) according to the position parameter; and/or
- bringing a first of the bearing points (44, 46, 48) into contact with the surface to be machined, then bring a second of the bearing points (44, 46, 48) into contact, with the first bearing point remaining in contact, then bringing the third of the bearing points (44, 46, 48) into contact, with the two other bearing points (44, 46, 48) remaining in contact, the contact being preferably made in each case so that said corresponding pressure force (F1, F2, F3) gradually reaches a predetermined value.

11. Method according to any of claims 7 to 10, further including:
- mounting a sensing means (64) on the support (52), preferably substantially at the same location as the machine tool (54); and
- after placing the housing (30) in the machining position, sensing the surface to be machined (16), comprising: moving the support (52) and the sensing means (64) relative to the housing (30) by means of the control system (31); and calculating, by means of the control system (31), shape parameters representative of a shape of the surface to be machined (16);
calculating the movement instruction of the machine tool (54) by means of the control system (31) using the shape parameters.

12. Method according to claim 11, wherein:
- the sensing takes place after said fastening of the housing (30) to the surface to be machined (16) and before mounting the machine tool (54) on the support (52); and
- the housing (30) remains fastened to the surface to be machined (16) during mounting of the machine tool (54) on the support (52);
the machining apparatus (28) preferably comprising a store (66) suitable for receiving the sensing means (64) or the machine tool (54) in respective storage positions.

13. Method according to claim 12, wherein, after the sensing, the housing (30) is moved away from the surface to be machined (16) by the articulated arm (26), the sensing means (64) is removed from the support (52), then the machine tool (54) is mounted on the support (52), and another placement of the housing (30) is carried out to return the housing (30) to the machining position.
